# EUROPÄISCHE PATENTSCHRIFT

(11) **EP 0 405 377 B1**
(45) Veröffentlichungstag und Bekanntmachung des Hinweises auf die Patenterteilung: **03.11.1993**
(21) Anmeldenummer: 90111957.8
(22) Anmeldetag: 23.06.1990
(51) Int. Cl.: A01B 49/06

(54) **Säanordnung**
Seeding apparatus
Dispositif de semis

(30) Priorität: 28.06.1989 DE 3921113
(43) Veröffentlichungstag der Anmeldung: 02.01.1991
(73) Patentinhaber: Horsch Maschinen GmbH, D-92421 Schwandorf (DE)
(72) Erfinder: Horsch, Michael, D-8460 Schwandorf (DE)
(74) Vertreter: Wasmeier, Alfons, Dipl.-Ing.

(56) Entgegenhaltungen:
- EP-A- 0 268 163
- DE-A- 3 504 684
- DE-A- 3 627 801
- US-A- 3 194 323

## Beschreibung

Die Erfindung betrifft eine Säanordnung nach dem Oberbegriff des Anspruches 1.

Bei derartigen Säanordnungen, die u.a. auch von der Anmelderin hergestellt werden, wird eine Kreiselegge oder Rüttelegge zur Saatbeetbereitung verwendet. Derartige Eggen sind in der Lage, den grob gelockerten Boden für die Saatbeetbereitung fein zu krümeln und gleichzeitig die Bodenoberfläche einzuebnen, so daß eine plane Oberfläche entsteht. Letzteres läßt sich mit rotierenden Eggen mit horizontaler Walze nicht erreichen. Die vertikal arbeitenden Kreiselelemente führen dabei eine Bodenbearbeitung zwischen 5 und 20 cm Tiefe aus. Unmittelbar hinter dieser Kreiselegge kann eine Planierschiene angeordnet sein, die das vorbereitete Saatbeet auf ein bestimmtes Niveau bringt und planiert, so daß hinter der Planierschiene eine ebene Oberfläche erhalten wird. Auf diese ebene Oberfläche wirkt eine sich ebenso wie die Planierschiene über die gesamte Maschinenbreite erstreckende Packerwalze ein, die auf der von der Planierschiene geebneten Oberfläche aufliegt und diese verdichtet, um einen Kapillarschluß des Sägutes zu erreichen. Hinter der Packerwalze tauchen die Säschare, die gemeinsam an einem Rahmen befestigt sind, in den vorverdichteten Boden ein; die Säschare sind dabei höhenbeweglich so angeordnet, daß sie bei unterschiedlicher Bodenbeschaffenheit unterschiedlich tief in den Boden eintauchen und damit die Abgabe des Sägutes in unterschiedlicher Tiefe erfolgt. Die gesamte Säanordnung ist beispielsweise mit Vorderrädern und Hinterrädern versehen, die im Betrieb angehoben und außer Bodenkontakt gebracht werden können.

Die Säschare nach dieser bekannten Anordnung sind federbelastet, so daß ihre Position in vertikaler Richtung relativ zu Packerwalze und zu Kreiselegge je nach Sägut und je nach Bodenbeschaffenheit verändert werden kann. Das Sägut wird dabei in die durch die Kreiselegge gelockerte und durch die Packerwalze verdichtete Erdschicht eingelegt, wobei die Sätiefe je nach Bodenbeschaffenheit und Verdichtung variiert. Damit wird das Saatgut abhängig von der Bodenbeschaffenheit in unterschiedlicher Höhe zur Oberfläche in die gelockerte Bodenschicht eingebracht, d.h. entweder höher oder tiefer als die angestrebte Sätiefe. Diese unterschiedliche Höhenlage des Sägutes ist nachteilig, da für jedes Sägut eine bestimmte Sätiefe optimal ist.

Es sind bereits Vorrichtungen bekannt, um zur Änderung der ungleichen Sätiefe während der Fahrt den Federdruck zu verstellen, damit der Schardruck geändert wird. Diese Verstellung erfolgt vom Schlepper aus durch den Fahrer. Derartige Verstellvorrichtungen sind jedoch relativ kompliziert, sowohl im Aufbau als in der Bedienung, so daß dies keine zufriedenstellende Lösung darstellt.

Die den Säscharen vorgeschaltete Packerwalze verdichtet den von der Kreiselegge gelockerten Boden, ehe die Säschare Sägut in das Erdreich einführen. Der obere Bereich des gelockerten Bodens, etwa bis zu einer Tiefe von 5 cm, wird somit verdichtet, und die Säschare sollen das Sägut auf den verdichteten Saathorizont einbringen. Bei schwierigen Böden, insbes. auch bei wechselnden Böden innerhalb eines Feldes, ergibt sich hierdurch eine relativ schlechte Sägutablage. Insbesondere bei schweren und feuchten Böden ist die vom Säschar gezogene kleine Furche, in die das Saatkorn eingelegt wird, häufig nicht ausreichend tief und kann nicht mit der notwendigen Menge an Feinerde bedeckt werden, da die vorauslaufende Packerwalze den Boden zu stark verdichtet hat, so daß häufig ein unzureichender Kapillarschluß erhalten wird, der das Ankeimen des Saatkornes und das Wachstum erheblich beeinflussen kann.

Aus der DE-A- 35 04 684 ist eine Planiereinrichtung bekannt, die in Verbindung mit verschiedenartigen Bodenbearbeitungsmaschinen, z.B. Sämaschinen, verwendbar ist. Die Kombination aus einer derartigen Sämaschine und einer Planiereinrichtung weist ein Stützrad, eine Kreiselegge, eine Packerwalze, höhenverstellbare Säschare und die Planierschiene zwischen Kreiselegge und Säscharen auf. Eine derartige Planierschiene ist in Gelenklagern mittels ein Parallelogramm bildenden Schwenkarmen in Gelenkarmen mit Haltestielen parallelogrammgelenkig verbunden, derart, daß die Schwenkarme im Zusammenwirken mit den Gelenklagern der Planierschiene und den Gelenkpunkten der Haltestiele als Parallelogramm-Gelenk angeordnet ist.

Aufgabe der Erfindung ist es deshalb, bei einer gattungsgemäßen Säanordnung zu erreichen, daß das Sägut in einer definierten einstellbaren Saattiefe ausgebracht wird, und daß andererseits das Einbringen des Saatgutes mit optimalem Bodenschluß und Feinerdeanteil erreicht wird.

Diese Aufgabe wird gemäß der Erfindung gelöst mit den Merkmalen des Kennzeichens des Ansprüches 1. Weitere Ausgestaltungen der Erfindung sind Gegenstand der Unteransprüche.

Die erfindungsgemäßen Säanordnung ist so aufgebaut, daß an die Kreisel- oder Rüttelegge in der Regel eine Planierschiene anschließt, auf die die Säschare folgen, so daß die Säschare unmittelbar in den von der Kreiselegge gelockerten Boden auf eine fest einstellbare, definierte Saattiefe eintauchen und das Sägut in den gelockerten Boden in einer gleichbleibenden Sätiefe ablegen. An die Säschare schließt sich die Packerwalze an, die den lockeren Boden mit dem Sägut gegen den unbearbeiteten Unterboden andrückt, damit ein einwandfreier Bodenschluß erzielt wird. Für eine einwandfreie Arbeitsweise der Säanordnung nach der Erfindung ist entscheidend, daß die Sätiefe, d.h. die Höhenstellung der Säschare einstellbar ist und diese Sätiefe dann unabhängig von der Bodenbeschaffenheit unverändert beibehalten wird, so daß die Tiefe, in der das Sägut abgelegt wird, frei gewählt und eine definierte Sätiefe erzielt werden kann. Die Säschare sind zu diesem Zweck so am Maschinenrahmen befestigt, daß sie zwar nach oben auslenken können, wenn z.B. ein Stein überfahren wird, indem eine einstellbare Vorspannkraft überwunden werden muß, daß die Verbindung der Säschare mit der Säschiene jedoch gegen einen einstellbaren Anschlag anliegt, der die tiefste Stellung der Säschare festlegt, d.h., daß die Säschare nur bis zu einer bestimmten Tiefe in das gelockerte Erdreich eintauchen können und in dieser Position auch durch Federkraft gehalten werden. Durch die Gewährleistung einer definierten, fest einstellbaren Sätiefe wird erreicht, daß das Sägut gleichmäßig und unabhängig von wechselnden Böden ausgebracht wird und damit optimale Bedingungen für das Anwachsen des Kornes und Wachsen des Keimlings geschaffen werden. Die Verdichtung der das Saatgut aufnehmenden Bodenschicht und die Erzielung des einwandfreien Bodenschlusses erfolgt durch die Packerwalze unmittelbar im Anschluß an die Säschare, wobei der Druck variabel ist, z.B. durch Einstellung des Druckes der Walze alleine oder unter Einschaltung des Maschinengewichtes.

Die Säanordnung nach der Erfindung arbeitet nach dem Grädereffekt, wobei die Planierschiene zwischen zwei abstützenden Stellen arbeitet, so daß der Effekt umso günstiger ist, je weiter entfernt die beiden Abstützstellen voneinander angeordnet sind.

Nachstehend wird die Erfindung in Verbindung mit der Zeichnung anhand eines Ausführungsbeispieles erläutert. Es zeigt:

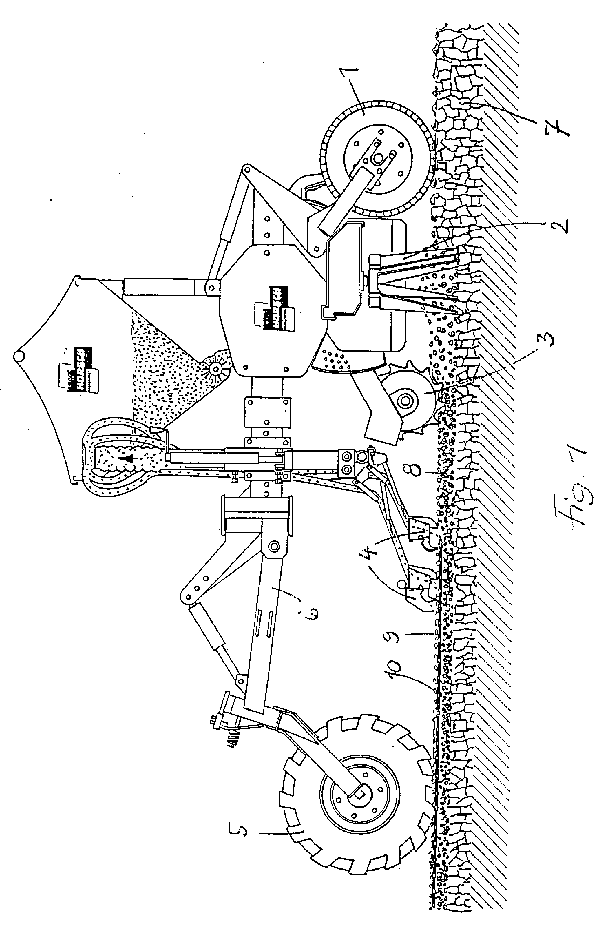

- Fig. 1: eine Ausführungsform einer bekannten Säanordnung, und
- Fig. 2: eine Ausführungsform einer Säanordnung nach der Erfindung.

Bei einer bekannten Säanordnung bezeichnet 1 vordere Stützräder, 2 eine Kreiselegge, 3 eine Packerwalze, 4 eine Vielzahl von parallel nebeneinander auf einem Rahmen angeordneten Säscharen, 5 hintere Stützräder und 6 den gemeinsamen Rahmen, der die Arbeitsgeräte und die Stützräder aufnimmt. Mit 7 ist der gepflügte Boden bezeichnet, mit 8 die obere, gelockerte Bodenschicht, die durch die Kreiselegge 2 bearbeitet ist, und mit 9 die durch die Packerwalze 3 verdichtete oberste, feine Erdreichschicht, in die die Saatkörner 10 eingelegt werden.

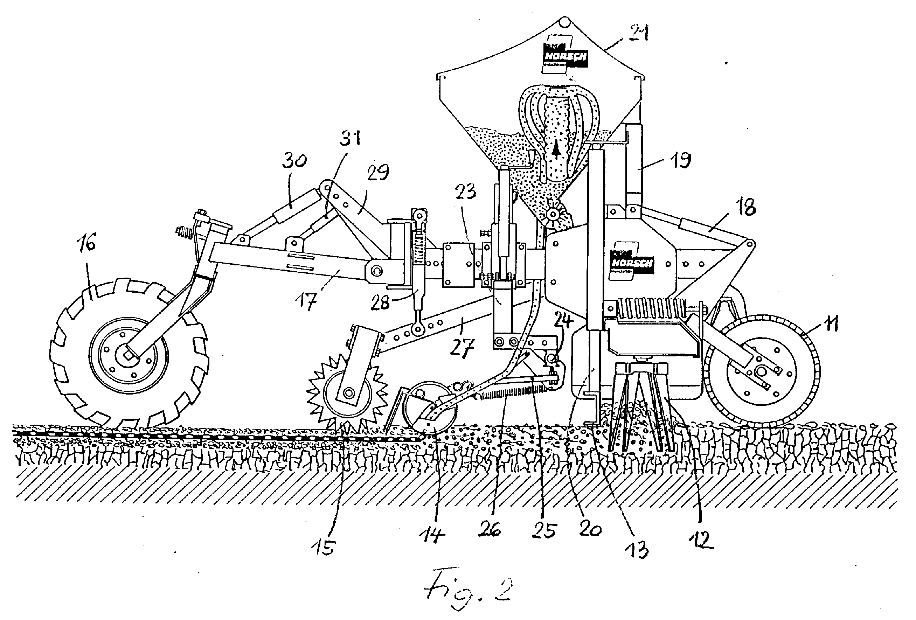

Bei der erfindungsgemäßen Säanordnung nach Fig. 2 bezeichnet 11 die vorderen Stützräder, 12 die Kreiselegge mit vertikal rotierenden Kreiselelementen, 13 eine Planierschiene, 14 die Vielzahl von in axialer Richtung parallel nebeneinander im Abstand angeordneten, am Rahmen befestigten Säscharen, 15 die Packerwalze im Anschluß an die Säschare 14, und 16 die hinteren Stützräder. Diese einzelnen Bestandteile sind auf einem Maschinenträger bzw. Rahmen 17 befestigt. Die vorderen Stützräder 11, die im Falle einer gezogenen Säanordnung über die gesamte Arbeitsbreite der Maschine angeordnet sind, während im Falle einer Anbau-Säanordnung die Räder 11 in den beiden Außenbereichen vorgesehen sind, während im mittleren Bereich die Säanordnung mit dem Schlepperfahrzeug befestigt ist, sind, wie mit Höhenverstellspindel 18 schematisch angedeutet, heb- und senkbar ausgebildet, wobei die Spindel 18 mit einem Träger 19 verbunden ist. Die Planierschiene 13 ist höhenverstellbar, wie mit 20 angedeutet, und mit dem Maschinenrahmen 17 verbunden. Der Sägutbehälter 21 ist auf dem Maschinenrahmen 17 aufgesattelt, kann jedoch z.B. auch auf dem (nicht dargestellten) Zugfahrzeug angeordnet sein. Vom Sägutbehälter 21 führen Sägutleitungen 22 zu den einzelnen Säscharen 14. Die Sägutabgabe in die Sägutleitungen 20 erfolgt über eine Einstellmechanik, die mit vertikalen Trägern 23 verbunden ist, welche am unteren Ende Begrenzungen 24 als Anschläge aufweisen, gegen die Anschlagelemente 25 treffen, die mit den Halterungen der Säschare 14 verbunden sind und sicherstellen, daß die Säschare eine definierte, einstellbare Sätiefe nicht unterschreiten. Mit 26 sind Spannfedern zwischen Säscharen 14 und Trägern 23 dargestellt, die das Säschar in die Betriebsstellung vorspannen, unddie beim Überfahren eines Steines oder dergl. ein Auslenken des jeweiligen Säschares nach oben ermöglichen. Die Packerwalze 15 ist über einen Träger 27 mit dem Maschinenrahmen 17 verbunden und über eine federbelastete Einstellvorrichtung 28 höhenverstellbar. 29 bezeichnet einen mit dem Rahmen 17 verbundenen Träger, von dem eine Hubvorrichtung 30 zum Anheben und Senken der Hinterräder 16 ausgeht. 31 ist eine einstellbare Spindel, mit der die hinteren Stützräder 16 höhenverstellbar sind. Die Stützräder 11 und 16 sind über die gesamte Maschinenbreite verteilt angeordnet, um den Bodendruck so gering wie möglich zu halten, sie können bei einer derartigen Säanordnung jedoch auch entfallen, wenn die Säanordnung von einem Schlepper aufgenommen wird.

## Patentansprüche

1. Säanordnung mit vorderen und hinteren Stützrädern (11, 16), mit einer Egge (12) mit um eine vertikale Achse rotierenden bzw. hin- und hergehenden Werkzeugen mit einebnender Wirkung, insbesondere Kreiseleggen oder Rütteleggen, mit einer höhenverstellbaren Packerwalze (15), höhenverstellbaren in Säfurchen arbeitenden Säscharen (14), einem Egge, Packerwalze und Säschare aufnehmenden Maschinenrahmen (17), und einer Planierschiene (13) zwischen Egge (12) und Säscharen (14), **dadurch gekennzeichnet**, daß
die Säschare (14) auf eine vorgegebene, definierte Sätiefe und damit auf einen gleichbleibenden Sägutpegel einstellbar am Maschinenrahmen (17) befestigt sind, daß die Säschare (14) nach oben entgegen einer Federspannung (26) auslenkbar sind und zur Tiefenbegrenzung und Erzielung einer gleichbleibenden Sätiefe durch einen höhenverstellbaren Anschlag (24) begrenzt sind, und daß den Säscharen (14) eine die gelockerte Erdschicht im oberen Bereich verdichtende Packerwalze (15) nachgeschaltet ist,.

2. Säanordnung nach Anspruch 1, dadurch gekennzeichnet, daß hintere Stützräder (16) zur Tiefenführung vorgesehen sind.

3. Säanordnung nach Anspruch 1, dadurch gekennzeichnet, daß hintere Stützräder (16) und vordere Stützräder (11) zur Tiefenführung vorgesehen sind.

4. Säanordnung nach Anspruch 1, dadurch gekennzeichnet, daß eine Kombination aus hinteren Stützrädern (16), vorderen Stützrädern (11) und Packerwalze (15) als Tiefenführung ausgebildet ist, und daß durch eine einstellbare Federanordnung (28) die Andrückkraft der Packerwalze (15) variierbar ist.

## Claims

1. Sowing device with front and rear support wheels (11, 16), having a harrow (12) with reciprocating tools rotating about a vertical axis and which have a levelling action, in particular rotary or shaking harrows, with a vertically adjustable packing roller (15), vertically adjustable sowing blades (14) operating in sowing furrows, a machine frame (17) receiving a harrow, packing roller and sowing blade, and a levelling rail (13) between the harrow (12) and the sowing blades (14), characterized in that the sowing blades (14) are fixed to the machine frame (17) so as to be adjustable to a predetermined, clearly defined sowing depth and therefore to a constant seed level, that the sowing blades (14) are upwardly deflectable in opposition to a spring tension means (26) and for depth limitation and obtaining a constant sowing depth are limited by a vertically adjustable stop member (24) and that the sowing blades (14) are followed by a packing roller (15) ccmpacting the loosened soil layer in the upper region.

2. Sowing device according to claim 1, characterized in that rear support wheels (16) are provided for depth guidance purposes.

3. Sowing device according to claim 1, characterized in that rear support wheels (16) and front support wheels (11) are provided for depth guidance purposes.

4. Sowing device according to claim 1, characterized in that a combination of rear support wheels (16), front support wheels (11) and packing roller (15) is constructed as a depth guidance means and that the pressing force of the packing roller (15) is modifiable by an adjustable spring arrangement (28).

## Revendications

1. Dispositif de semis avec des roues de support avant et arrière (11, 16), avec une herse (12) à outils tournant autour d'un axe vertical ou effectuant un va-et-vient avec une action de nivellement, en particulier des herses rotatives ou des herses vibrantes, avec un rouleau de tassement (15) réglable en hauteur, des socs d'ensemencement (14) réglables en hauteur travaillant dans des sillons, un châssis de machine (17) recevant la herse, le rouleau de tassement et les socs, et un rail de nivellement (13) entre la herse (12) et les socs (14), caractérisé en ce que
les socs d'ensemencement (14) sont fixés au châssis de machine (17) de manière réglable à une profondeur d'ensemencement définie donnée et ainsi à un niveau des semences restant constant, les socs (14) peuvent être déviés vers le haut à l'encontre de l'action d'un ressort (26) et ils sont limités par une butée (24) réglable en hauteur pour la limitation de profondeur et l'obtention d'une profondeur d'ensemencement constante, et un rouleau de tassement (15) rendant plus compacte dans la région supérieure la couche de terre relâchée est intercalé à la suite des socs (14).

2. Dispositif de semis selon la revendication 1 caractérisé en ce qu'on prévoit des roues de support arrière (16) pour le guidage en profondeur.

3. Dispositif de semis selon la revendication 1 caractérisé en ce qu'on prévoit des roues de support arrière (16) et avant (11) pour le guidage en profondeur.

4. Dispositif de semis selon la revendication 1 caractérisé en ce qu'une combinaison de roues de support arrière (16), de roues de support avant (11) et de rouleau de tassement (15) est agencée comme guidage en profondeur et on peut faire varier la pression du rouleau de tassement (15) au moyen d'un dispositif à ressort (28) réglable.
